# EUROPÄISCHE PATENTSCHRIFT

(11) **EP 4 555 232 B1**
(45) Veröffentlichungstag und Bekanntmachung des Hinweises auf die Patenterteilung: **05.08.2026**
(21) Anmeldenummer: 23735630.8
(22) Anmeldetag: 21.06.2023
(51) Int. Cl.: F16H 57/04

(54) **GETRIEBE MIT GEHÄUSE**
GEARING WITH HOUSING
ENGRENAGE DOTÉ D'UN LOGEMENT

(30) Priorität: 12.07.2022 DE 102022002542
(43) Veröffentlichungstag der Anmeldung: 21.05.2025
(73) Patentinhaber: SEW-EURODRIVE GmbH & Co. KG, 76646 Bruchsal (DE)
(72) Erfinder: ELLER, Peter, 76676 Graben-Neudorf (DE); SCHWAN, Tobias, 69168 Wiesloch (DE); LUFT, Christian, 76698 Ubstadt-Weiher (DE)
(86) Internationale Anmeldenummer: PCT/EP2023/066859
(87) Internationale Veröffentlichungsnummer: WO 2024/012831

(56) Entgegenhaltungen:
- WO-A1-2022/002433
- DE-A1- 102008 004 337
- DE-A1- 3 209 514

## Beschreibung

Die Erfindung betrifft ein Getriebe mit Gehäuse.

Es ist allgemein bekannt, dass Verlustwärme eines Getriebes das Schmieröl des Getriebes erwärmt.

Aus der DE 10 2008 004 337 A1 ist als nächstliegender Stand der Technik ein Gehäuse für ein Getriebe bekannt.

Aus der US 2 700 940 A1 ist eine Vorrichtung zum Vorbereiten von schmelzbarem Material bekannt.

Aus der DE 10 2016 003 716 A1 ist ein Getriebesystem bekannt.

Aus der DE 10 2007 020 453 A1 ist ein Getriebe bekannt.

**Aus der** WO 2022/002433 A1 **ist ein Getriebe mit einer Welle und einem Gehäuseteil bekannt.**

**Aus der** DE 32 09 514 A1 **ist eine Getriebeanlage mit Druckschmierung bekannt.**

Der Erfindung liegt daher die Aufgabe zugrunde, ein Getriebe mit Gehäuse weiterzubilden, wobei das Getriebe kompakt ausgeführt sein soll, insbesondere mit verbesserter Kühlung.

Erfindungsgemäß wird die Aufgabe bei dem Getriebe nach den in Anspruch 1 angegebenen Merkmalen gelöst.

Wichtige Merkmale der Erfindung bei dem Getriebe mit Gehäuse sind, dass das Gehäuse ein Unterteil und ein Oberteil aufweist,
insbesondere wobei das Oberteil auf das Unterteil aufgesetzt und mit ihm verbunden ist,
insbesondere wobei das Unterteil mit dem Oberteil insbesondere mittels Schrauben verbunden ist,
wobei im Oberteil eine erste Bohrung, insbesondere Sacklochbohrung, und eine zur ersten Bohrung parallele zweite Bohrung, insbesondere Sacklochbohrung, eingebracht ist,
wobei die erste Bohrung an der äußeren Oberfläche des Oberteils mündet und mit einem ersten Anschluss, insbesondere Auslass, eines Ölfilters verbunden ist,
wobei die zweite Bohrung an der äußeren Oberfläche des Oberteils mündet und mit einem zweiten Anschluss, insbesondere Einlass, eines Ölfilters verbunden ist,
wobei die zweite Bohrung als Ölverteiler fungiert, also Rohre, insbesondere Ölleitungsrohre, und/oder Kanäle, insbesondere Ölleitungskanäle, in die zweite Bohrung münden.

Von Vorteil ist dabei, dass mittels der Integration des Ölverteilers im Oberteil des Gehäuses die Kühlung des Öls verbessert wird, also der Wärmeübergangswiderstand vom Öl zum Gehäuse bei kompakter Ausführung des Getriebes verringert wird. Denn statt eines externen Verteilers wird das Öl durch Bohrungen und/oder Kanäle des Oberteils geleitet, sodass die Wärme des Öls direkt übergeht in das Oberteil und von dort an die Umgebung.

Die kompakte Ausführung des Getriebes wird dadurch bewirkt, dass ein Ölverteiler keinen zusätzlichen Bauraum benötigt, sondern im Getriebe integriert angeordnet ist.

Bei einer vorteilhaften Ausgestaltung sind jeweilige Lageraufnahmen insbesondere von jeweiligen Wellen geteilt ausgeführt, insbesondere nämlich teilweise im Unterteil und teilweise im Oberteil angeordnet sind. Von Vorteil ist dabei, dass die jeweilige Lageraufnahme geteilt, insbesondere halbiert, ist. Somit ist das Lager einerseits im Unterteil und andererseits im Oberteil aufgenommen. Der Außenring des Lagers zentriert somit das Oberteil zum Unterteil. Außerdem ist eine einfache Herstellung ermöglicht, indem das jeweilige Lager in eine jeweilige Lageraufnahme in Normalenrichtung der Verbindungsebene absenkbar ist und danach das Oberteil aufsetzbar ist. Das Lager muss also nicht in axialer Richtung, insbesondere also in Richtung seiner Drehachse, in die Lageraufnahme eingeschoben werden. Vorzugsweise halbiert also die Verbindungsebene die jeweilige Lageraufnahme. Die Drehachse des Lagers und der mittels des Lagers jeweils gelagerten Welle ist parallel zur Verbindungsebene ausgerichtet.

Bei einer vorteilhaften Ausgestaltung ist die erste Bohrung, insbesondere deren Bohrungsachse, parallel zur Verbindungsebene, insbesondere Berührebene, des Oberteils mit dem Unterteil ausgerichtet,
insbesondere wobei die erste Bohrung, insbesondere die Bohrungsachse der ersten Bohrung, horizontal ausgerichtet ist und/oder die Normale der Verbindungsebene, insbesondere Berührebene, zwischen Oberteil und Unterteil vertikal ausgerichtet ist. Von Vorteil ist dabei, dass der Ölverteiler mit Ölfilter und Überdruckventil in dem Oberteil integrierbar ist, wobei nur zwei parallele Bohrungen ins Oberteil einzubringen sind. Somit ist in einer der Bohrungen das Überdruckventil anordenbar und beide münden an den Anschlüssen des Ölfilters. Eine der Bohrungen fungiert als Ölverteiler.

Bei einer vorteilhaften Ausgestaltung ist ein erster Teil einer ersten Lageraufnahme im Oberteil ausgeführt und ein zweiter Teil der ersten Lageraufnahme ist im Unterteil ausgeführt,
insbesondere wobei der erste Teil vom zweiten Teil mittels der Verbindungsebene voneinander getrennt sind. Von Vorteil ist dabei, dass die Lageraufnahme geteilt ausgeführt ist und somit eine einfache Herstellung des Getriebes durch bloßes Einlegen des Lagers in die jeweilige Lageraufnahme ausführbar ist.

Bei einer vorteilhaften Ausgestaltung ist in der zweiten Bohrung ein Öldruckventil angeordnet, insbesondere welches derart geeignet angeordnet und/oder ausgeführt ist, dass bei Überschreiten eines Öldruckschwellwertes das Öldruckventil den Durchfluss von Öl durch die zweite Bohrung sperrt und/oder unterbricht. Von Vorteil ist dabei, dass eine einfache Aufnahme des Überdruckventils in einer der Bohrungen ermöglicht ist.

Bei einer vorteilhaften Ausgestaltung führen die Rohre zu Schmierstellen des Getriebes, insbesondere zu Lagern oder zu Bereichen von miteinander sich in Eingriff befindenden Verzahnungen von Verzahnungsteilen. Von Vorteil ist dabei, dass die Ölverteilung im Oberteil integriert ausgeführt ist. Die Rohre sind vorzugsweise als vom Oberteil separate Stücke ausgeführt. Im Oberteil angeordnete Kanäle sind mittels Bohrungen im einteilig und/oder einstückig ausgeführten Oberteil realisierbar. Mittels eines Kanals ist somit Öl zu einem Lager hinführbar.

Bei einer vorteilhaften Ausgestaltung mündet zumindest ein Kanal in einem Raumbereich zwischen einem Lagerdeckel und einer Haube,
wobei die Haube den Innenring und die Wälzkörper eines Lagers, insbesondere Wälzlagers, zum Lagerdeckel hin abdeckt, insbesondere also zwischen dem Lager und dem Lagerdeckel angeordnet ist,
insbesondere wobei die Haube am Außenring des Lagers dicht anliegt. Von Vorteil ist dabei, dass das Öl gezwungen wird, zunächst am Lagerdeckel, insbesondere an der Innenseite des Lagerdeckels, entlangzuströmen und dadurch möglichst viel Wärme an den Lagerdeckel abzugeben.

Bei einer vorteilhaften Ausgestaltung weist die Haube zumindest eine Ausnehmung auf, insbesondere zum zum Lager hin gerichteten Durchlass von an der Innenseite des Lagerdeckels vorbeiströmenden Öls, insbesondere gekühlten Öls. Von Vorteil ist dabei, dass das am Lagerdeckel abgekühlte Öl zum Lager hinleitbar ist.

Bei einer vorteilhaften Ausgestaltung ist die Haube aus Kunststoff gefertigt, insbesondere als Kunststoffspritzgussteil. Von Vorteil ist dabei, dass die Haube wärmeisolierend ausführbar ist und somit ein möglichst großer Wärmestrom über den Lagerdeckel ausleitbar ist.

Zusätzlich sind auch radial durchgehende Ausnehmungen in der Haube vorsehbar und somit ein steter Fluss des Öls aufrechterhaltbar, wenn die Summe der Querschnitte dieser radial durchgehenden Ausnehmungen der Haube kleiner ist als der kleinste Querschnitt des das Öl zuführenden Kanals. Allerdings muss die um den Querschnitt der axial durchgehenden Ausnehmung vergrößerte Summe größer sein als der kleinste Querschnitt des das Öl zuführenden Kanals.

Bei einer vorteilhaften Ausgestaltung ist die Ausnehmung axial durchgehend. Von Vorteil ist dabei, dass das Lager mit Öl versorgbar ist, wenn der Ölpegel an der Haube entsprechend hoch angestiegen ist.

Bei einer vorteilhaften Ausgestaltung ist der Lagerdeckel vertikal über dem Lager angeordnet. Von Vorteil ist dabei, dass trotz der vertikal höheren Position des Lagerdeckels ermöglicht ist, dass das Öl an der Innenseite des Lagerdeckels entlangströmt und dabei gekühlt wird.

Bei einer vorteilhaften Ausgestaltung ist eine dritte Bohrung im Unterteil angeordnet, insbesondere deren Bohrungsachse parallel zur Normalen der Verbindungsebene ausgerichtet ist,
und eine vierte Bohrung ist im Oberteil angeordnet, insbesondere deren Bohrungsachse parallel zur Normalen der Verbindungsebene ausgerichtet ist,
wobei die dritte und die vierte Bohrung zueinander koaxial ausgerichtet sind. Von Vorteil ist dabei, dass die Ölpumpe im Unterteil anordenbar ist und das von der Ölpumpe geförderte Öl innerhalb des einstückig ausgebildeten Unterteils gefördert wird und von dort ins Oberteil fließt.

Bei einer vorteilhaften Ausgestaltung fließt das von der Ölpumpe geförderte Öl durch die dritte Bohrung in die vierte Bohrung. Von Vorteil ist dabei, dass das Öl durch die Verbindungsebene, insbesondere Splitebene, hindurchfließt, wobei die Verbindungsstelle abgedichtet ausgeführt ist, insbesondere mittels einer ringförmigen Dichtung.

Bei einer vorteilhaften Ausgestaltung mündet die vierte Bohrung in die erste Bohrung. Von Vorteil ist dabei, dass das vom Unterteil herkommende Öl im Oberteil durch die vierte zur ersten Bohrung und somit dann zum Anschluss des Ölfilters geleitet wird, aus dem der im Oberteil integrierte Ölverteiler gespeist wird.

Bei einer vorteilhaften Ausgestaltung ist zwischen dem Oberteil und dem Unterteil eine Dichtung, insbesondere ringförmige Flachdichtung, angeordnet, welche die dritte und vierte Bohrung zur Umgebung hin abdichtet. Von Vorteil ist dabei, dass das Oberteil mit dem Unterteil dicht verbunden ist, so dass das von der Ölpumpe geförderte Öl zum Oberteil geleitet wird und dort dem Ölfilter zugeführt wird, aus welchem dann der Ölverteiler gespeist wird, welcher die zweite Bohrung aufweist, in welche Rohre und/oder Kanäle münden, die im Oberteil eingebracht oder am Oberteil befestigt sind.

Weitere Vorteile ergeben sich aus den Unteransprüchen.

Die Erfindung wird nun anhand von schematischen Abbildungen näher erläutert:

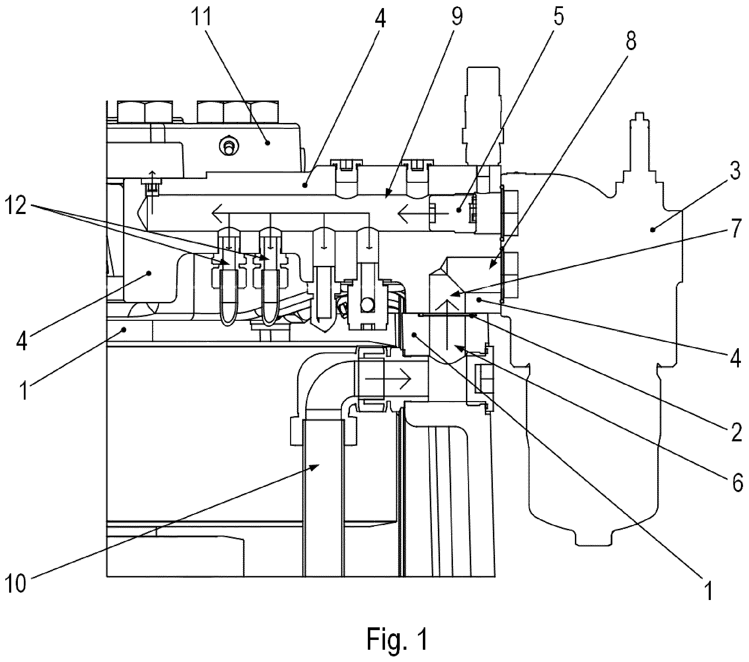

In der Figur 1 ist ein Bereich eines erfindungsgemäßen Getriebes in Schnittansicht dargestellt.

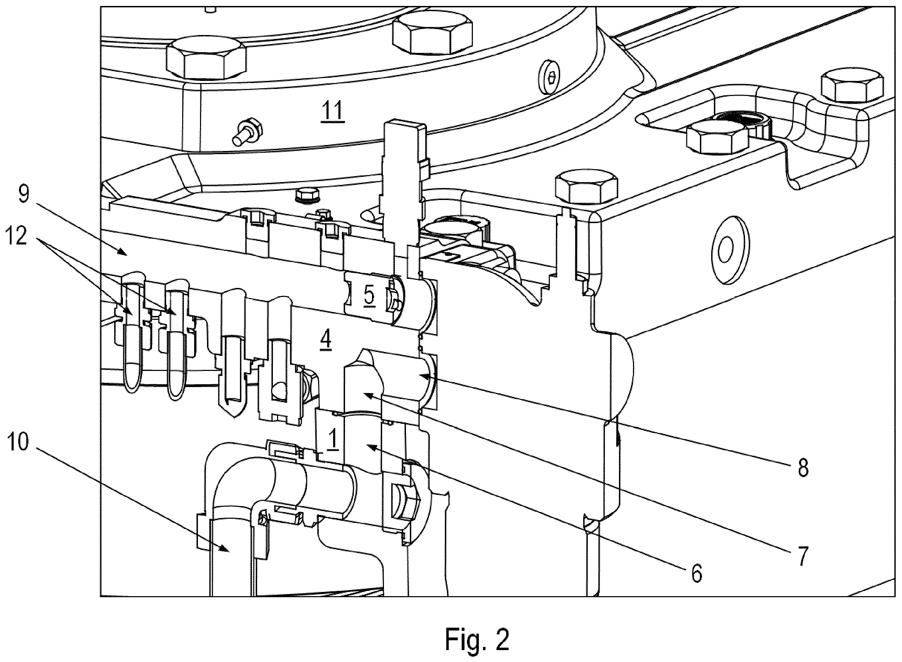

In der Figur 2 ist der Bereich angeschnitten in Schrägansicht dargestellt.

Wie in den Figuren dargestellt, weist das Gehäuse des Getriebes ein Oberteil 4 und ein mit dem Oberteil 4 verbundenes Unterteil 1 auf.

Die Verbindungsebene, also Berührebene, zwischen Oberteil 4 und Unterteil 1 ist auch als Splitebene bezeichenbar.

Eine Ölpumpe fördert Öl durch eine Rohrleitung 10 zu einer im Unterteil 1 angeordneten Bohrung 6, deren Bohrungsachse parallel zu einer Normalen der Splitebene ausgerichtet ist und die koaxial ausgerichtet ist zu einer weiteren Bohrung 7, welche im Oberteil 4 angeordnet ist und deren Bohrungsachse ebenfalls parallel zu einer Normalen der Splitebene ausgerichtet ist.

Zur dichten Verbindung der beiden Bohrungen 6 und 7 ist eine Dichtung 2, insbesondere Flachdichtung, insbesondere ringförmige Flachdichtung, zwischen dem Oberteil 4 und dem Unterteil 1 angeordnet.

Eine erste Bohrung 8 mündet in die weitere Bohrung 7 des Oberteils 4. Die Bohrungsachse der ersten Bohrung 8 ist senkrecht zur Bohrungsachse der weiteren Bohrung 7 ausgerichtet und mündet mit ihrem von der weiteren Bohrung 7 abgewandten Endbereich an der äußeren Oberfläche des Oberteils 4 in einen Anschluss, insbesondere Einlass, eines dort am Oberteil 4 angebrachten Ölfilters 3, dessen anderer Anschluss, insbesondere Auslass, mit einer zweiten Bohrung 9 verbunden ist, insbesondere so, dass das vom Ölfilter 3 gefilterte Öl in die zweite Bohrung 9 fließt.

Die erste Bohrung 8 des Oberteils 4 ist parallel zur zweiten Bohrung 9 des Oberteils 4 ausgerichtet.

Rohre 12 münden in die zweite Bohrung 9, insbesondere so, dass über die Rohre 12 Schmierstellen des Getriebes mit Öl versorgbar sind, insbesondere also Lager des Getriebes und Eingriffsbereiche von miteinander im Eingriff sich befindenden Verzahnungsteilen.

Außerdem mündet die zweite Bohrung in einen im Oberteil 4 angeordneten Kanal, welcher Öl in einen Zwischenraum zwischen einem Lagerdeckel 11 und einem vom Lagerdeckel 11 abgedeckten Lager leitet.

Dabei ist in diesem Zwischenraum eine Haube, insbesondere aus Kunststoff, angeordnet, welche am Außenring des Lagers anliegt und somit die im Lager gelagerte Welle sowie den Innenring und die Wälzkörper des Lagers trennt vom Lagerdeckel 11. Der Kanal mündet in den Bereich zwischen der Haube und dem Lagerdeckel. Somit gibt das Öl seine Wärme an den Lagerdeckel ab und kann dann durch eine Ausnehmung der Haube zum Lager gelangen, um dieses zu schmieren.

In der zweiten Bohrung 9 ist zwischen den Mündungen der Rohre 12 und dem Ölfilter 3 ein Öldruckventil 5 angeordnet, das bei Überschreiten eines Druck-Schwellwertes, insbesondere beispielsweise 1 bar, schließt.

Mittels der Erfindung ist also ein Ölverteiler im Oberteil integriert, das einstückig, insbesondere einteilig ausgeführt ist. Im Ölverteiler ist das Öldruckventil 5 angeordnet, insbesondere so, dass die Sicherheit erhöht ist.

Außerdem sind die beiden Bohrungen 8 und 9 parallel ausgerichtet und im Oberteil eingebracht, so dass mittels der beiden parallelen Bohrungen 8 und 9 ein einfaches Anschließen des Ölfilters 3 ermöglicht ist.

Bei weiteren erfindungsgemäßen Ausführungsbeispielen wird das Getriebe derart aufgestellt, dass das Oberteil 4 vertikal über dem Unterteil 1 angeordnet ist. Die erste Bohrung 6 ist ebenso wie die weitere Bohrung 7 eine Vertikalbohrung, insbesondere also eine vertikal gerichtete Bohrung.

### Bezugszeichenliste

1 Unterteil
2 Dichtung, insbesondere ringförmige Flachdichtung
3 Ölfilter
4 Oberteil
5 Öldruckventil
6 Bohrung, insbesondere Vertikalbohrung
7 Bohrung, insbesondere Vertikalbohrung
8 erste Bohrung
9 zweite Bohrung
10 Rohrleitung
11 Lagerdeckel
12 Rohr

## Patentansprüche

1. Getriebe mit Gehäuse,
wobei das Gehäuse ein Unterteil (1) und ein Oberteil (4) aufweist,
**wobei** im Oberteil (4) eine erste Bohrung (8), und eine zur ersten Bohrung (8) parallele zweite Bohrung, eingebracht ist,
**dadurch gekennzeichnet, dass**
die erste Bohrung (8) an der äußeren Oberfläche des Oberteils (4) mündet und mit einem ersten Anschluss, eines Ölfilters (3) verbunden ist,
wobei die zweite Bohrung (9) an der äußeren Oberfläche des Oberteils (4) mündet und mit einem zweiten Anschluss, eines Ölfilters (3) verbunden ist,
wobei die zweite Bohrung (9) als Ölverteiler fungiert, wobei also Rohre (12), /oder Kanäle, in die zweite Bohrung (9) münden.

2. Getriebe nach Anspruch 1,
**dadurch gekennzeichnet, dass**
jeweilige Lageraufnahmen von jeweiligen Wellen geteilt ausgeführt sind.

3. Getriebe nach einem der vorangegangenen Ansprüche,
**dadurch gekennzeichnet, dass**
die erste Bohrung (8), parallel zur Verbindungsebene, des Oberteils (4) mit dem Unterteil (1) ausgerichtet ist.

4. Getriebe nach einem der vorangegangenen Ansprüche,
**dadurch gekennzeichnet, dass**
ein erster Teil einer ersten Lageraufnahme im Oberteil (4) ausgeführt ist und ein zweiter Teil der ersten Lageraufnahme im Unterteil (1) ausgeführt ist.

5. Getriebe nach einem der vorangegangenen Ansprüche,
**dadurch gekennzeichnet, dass**
in der zweiten Bohrung (9) ein Öldruckventil (5) angeordnet ist, welches derart geeignet angeordnet ist, dass bei Überschreiten eines Öldruckschwellwertes das Öldruckventil (5) den Durchfluss von Öl durch die zweite Bohrung (9) sperrt.

6. Getriebe nach einem der vorangegangenen Ansprüche,
**dadurch gekennzeichnet, dass**
die Rohre (12) zu Schmierstellen des Getriebes führen.

7. Getriebe nach einem der vorangegangenen Ansprüche,
**dadurch gekennzeichnet, dass**
zumindest ein Kanal in einem Raumbereich zwischen einem Lagerdeckel (11) und einer Haube mündet,
wobei die Haube den Innenring und die Wälzkörper eines Lagers, insbesondere Wälzlagers, zum Lagerdeckel (11) hin abdeckt.

8. Getriebe nach Anspruch 7
**dadurch gekennzeichnet, dass**
die Haube zumindest eine Ausnehmung aufweist.

9. Getriebe nach Anspruch 8,
**dadurch gekennzeichnet, dass**
die Haube aus Kunststoff gefertigt ist.

10. Getriebe nach Anspruch 8 oder 9,
**dadurch gekennzeichnet, dass**
die Ausnehmung axial durchgehend ist.

11. Getriebe nach Anspruch 8, 9 oder 10,
**dadurch gekennzeichnet, dass**
der Lagerdeckel (11) vertikal über dem Lager angeordnet ist.

12. Getriebe nach einem der vorangegangenen Ansprüche,
**dadurch gekennzeichnet, dass**
eine dritte Bohrung im Unterteil (1) angeordnet ist, insbesondere deren Bohrungsachse parallel zur Normalen der Verbindungsebene ausgerichtet ist,
eine vierte Bohrung im Oberteil (4) angeordnet ist, insbesondere deren Bohrungsachse parallel zur Normalen der Verbindungsebene ausgerichtet ist,
wobei die dritte und die vierte Bohrung zueinander koaxial ausgerichtet sind.

13. Getriebe nach Anspruch 12,
**dadurch gekennzeichnet, dass**
das von der Ölpumpe geförderte Öl durch die dritte Bohrung in die vierte Bohrung fließt.

14. Getriebe nach Anspruch 12 oder 13,
**dadurch gekennzeichnet, dass**
die vierte Bohrung in die erste Bohrung (8) mündet.

15. Getriebe nach einem der Ansprüche 12 bis 14,
**dadurch gekennzeichnet, dass**
zwischen dem Oberteil (4) und dem Unterteil (1) eine Dichtung (2), insbesondere ringförmige Flachdichtung, angeordnet ist, welche die dritte und vierte Bohrung zur Umgebung hin abdichtet.

## Claims

1. A gear unit having a housing,
wherein the housing has a lower part (1) and an upper part (4),
wherein a first bore (8) and a second bore parallel to the first bore (8) are made in the upper part (4),
**characterised in that**
the first bore (8) issues at the outer surface of the upper part (4) and is connected to a first connection of an oil filter (3),
wherein the second bore (9) issues at the outer surface of the upper part (4) and is connected to a second connection of an oil filter (3),
wherein the second bore (9) acts as an oil distributor, wherein therefore pipes (12) or channels issue into the second bore (9).

2. A gear unit according to claim 1,
**characterised in that**
respective bearing receivers of respective shafts are divided.

3. A gear unit according to any one of the preceding claims,
**characterised in that**
the first bore (8) is oriented parallel to the connection plane of the upper part (4) with the lower part (1).

4. A gear unit according to any one of the preceding claims,
**characterised in that**
a first part of a first bearing receiver is formed in the upper part (4) and a second part of the first bearing receiver is formed in the lower part (1).

5. A gear unit according to any one of the preceding claims,
**characterised in that**
an oil pressure valve (5) is arranged in the second bore (9), which valve is suitably arranged such that when an oil pressure threshold value is exceeded, the oil pressure valve (5) blocks the passage of oil through the second bore (9).

6. A gear unit according to any one of the preceding claims,
**characterised in that**
the pipes (12) run to lubricating points of the gear unit.

7. A gear unit according to any one of the preceding claims,
**characterised in that**
at least one channel issues in a spatial region between a bearing cap (11) and a hood,
wherein the hood covers the inner race and the rolling elements of a bearing, in particular rolling bearing, towards the bearing cap (11).

8. A gear unit according to claim 7,
**characterised in that**
the hood has at least one cutout.

9. A gear unit according to claim 8,
**characterised in that**
the hood is manufactured of plastics material.

10. A gear unit according to claim 8 or 9,
**characterised in that**
the cutout is axially through-passing.

11. A gear unit according to claim 8, 9 or 10,
**characterised in that** the
the bearing cap (11) is arranged vertically above the bearing.

12. A gear unit according to any one of the preceding claims,
**characterised in that**
a third bore is arranged in the lower part (1), in particular whose bore axis is oriented parallel to the normal of the connection plane,
a fourth bore is arranged in the upper part (4), in particular whose bore axis is oriented parallel to the normal of the connection plane,
wherein the third and the fourth bore are oriented coaxially with one another.

13. A gear unit according to claim 12,
**characterised in that**
the oil conveyed by the oil pump flows through the third bore into the fourth bore.

14. A gear unit according to claim 12 or 13,
**characterised in that**
the fourth bore issues into the first bore (8).

15. A gear unit according to any one of claims 12 to 14,
**characterised in that**
a seal (2), in particular an annular flat seal, is arranged between the upper part (4) and the lower part (1) and seals the third and fourth bore with respect to the surroundings.

## Revendications

1. Engrenage avec carter,
dans lequel le carter comprend une partie inférieure (1) et une partie supérieure (4),
dans lequel, dans la partie supérieure (4), un premier perçage (8) et un deuxième perçage parallèle au premier perçage (8) sont réalisés,
**caractérisé en ce que**
le premier perçage (8) débouche sur la surface extérieure de la partie supérieure (4) et est relié à un premier raccord d'un filtre à huile (3),
dans lequel le deuxième perçage (9) débouche sur la surface extérieure de la partie supérieure (4) et est relié à un deuxième raccord d'un filtre à huile (3),
dans lequel le deuxième perçage (9) fonctionne comme répartiteur d'huile, de sorte que des tubes (12) et/ou des canaux débouchent dans le deuxième perçage (9).

2. Engrenage selon la revendication 1, **caractérisé en ce que** les logements de palier respectifs des arbres respectifs sont réalisés en parties divisées.

3. Engrenage selon l'une des revendications précédentes, **caractérisé en ce que** le premier perçage (8) est orienté parallèlement au plan de jonction de la partie supérieure (4) avec la partie inférieure (1),

4. Engrenage selon l'une des revendications précédentes, **caractérisé en ce qu'**une première partie d'un premier logement de palier est réalisée dans la partie supérieure (4) et une deuxième partie du premier logement de palier est réalisée dans la partie inférieure (1),

5. Engrenage selon l'une des revendications précédentes, **caractérisé en ce que** dans le deuxième perçage (9) est disposée une soupape de pression d'huile (5), qui est disposée de manière appropriée de sorte qu'en cas de dépassement d'un seuil de pression d'huile, la soupape de pression d'huile (5) bloque le débit d'huile à travers le deuxième perçage (9)

6. Engrenage selon l'une des revendications précédentes, **caractérisé en ce que** les tubes (12) mènent à des points de lubrification de l'engrenage,

7. Engrenage selon l'une des revendications précédentes, **caractérisé en ce qu'**au moins un canal débouche dans une zone d'espace entre un couvercle de palier (11) et un capot, dans lequel le capot recouvre la bague intérieure et les éléments roulants d'un palier, en particulier palier à roulement, vers le couvercle de palier (11),

8. Engrenage selon la revendication 7 **caractérisé en ce que** le capot présente au moins un évidement,

9. Engrenage selon la revendication 8, **caractérisé en ce que** le capot est fabriqué en matière plastique,

10. Engrenage selon la revendication 8 ou 9, 30 **caractérisé en ce que** l'évidement est traversant axialement.

11. Engrenage selon la revendication 8, 9 ou 10, **caractérisé en ce que** le couvercle de palier (11) est disposé verticalement au-dessus du palier.

12. Engrenage selon l'une des revendications précédentes, **caractérisé en ce qu'**un troisième perçage est disposé dans la partie inférieure (1), en particulier dont l'axe du perçage est orienté parallèlement à la normale du plan de jonction,
un quatrième perçage est disposé dans la partie supérieure (4), en particulier dont l'axe du perçage est orienté parallèlement à la normale du plan de jonction,
dans lequel le troisième et le quatrième perçage sont orientés coaxialement l'un par rapport à l'autre.

13. Engrenage selon la revendication 12, **caractérisé en ce que** l'huile acheminée par la pompe à huile s'écoule à travers le troisième perçage dans le quatrième perçage.

14. Engrenage selon la revendication 12 ou 13, **caractérisé en ce que** le quatrième perçage débouche dans le premier perçage (8).

15. Engrenage selon l'une des revendications 12 à 14, **caractérisé en ce qu'**entre la partie supérieure (4) et la partie inférieure (1) est disposé un joint (2), en particulier un joint plat annulaire, qui étanchéifie le troisième et le quatrième perçage par rapport à l'environnement.
